# DEMANDE DE BREVET EUROPEEN

(11) **EP 0 593 346 A1**
(43) Date de publication de la demande: **20.04.1994**
(21) Numéro de dépôt: 93402491.0
(22) Date de dépôt: 08.10.1993
(51) Int. Cl.: F17D 5/00, G01M 7/00

(54) **Procédé et dispositif pour ausculter par voie vibratoire un tronçon de canalisation**

(30) Priorité: 12.10.1992 FR 9212153
(71) Demandeur: SPIE-TRINDEL, F-95861 Cergy-Pontoise Cédex (FR)
(72) Inventeur: Xing, Weng Long, F-57270 Uckange (FR)
(74) Mandataire: Keib, Gérard

(57) **Abrégé**

a) on introduit en un point d'impact sur la surface intérieure du tronçon de canalisation (1) une force d'excitation d'entrée prédéterminée;
b) on mesure la réponse vibratoire dudit tronçon de canalisation (1) en un point de mesure, distinct du point d'impact, de ladite surface intérieure;
c) on enregistre, on traite et on analyse les données de nature vibratoire ainsi recueillies.

Utilisation notamment pour ausculter par voie vibratoire la structure d'une canalisation et la nature du terrain entourant cette canalisation au moyen d'un engin se déplaçant à l'intérieur de celle-ci.

## Description

La présente invention concerne un procédé pour ausculter par voie vibratoire un tronçon de canalisation, en particulier un tronçon de canalisation enterrée.

La présente invention concerne également un dispositif pour la mise en oeuvre du procédé précité.

On connaît des procédés comportant l'étape qui consiste à déplacer à l'intérieur d'un tronçon de canalisation un engin mobile portant différents organes de mesure et à enregistrer et traiter les résultats des mesures effectuées à des instants prédéterminés.

On sait par exemple contrôler l'étanchéité des joints formés entre deux éléments de canalisation adjacents: on isole de manière étanche du reste de la canalisation un espace comportant un tel joint, on injecte un fluide sous pression dans cet espace, et on mesure la diminution progressive de la pression dans cet espace. Toutes les opérations sont classiquement commandées et contrôlées depuis un poste de commande au sol.

D'une manière générale, on recherche depuis longtemps un procédé permettant de déterminer à partir de mesures effectuées à l'intérieur d'un tronçon de canalisation, l'état dudit tronçon de canalisation, et, si ce tronçon est enterré, la qualité et l'état du sol entourant ce tronçon.

Aucun des procédés proposés jusqu'ici n'a donné entière satisfaction.

Le but de la présente invention est de remédier aux inconvénients des procédés connus et de proposer un procédé du type précité qui soit d'utilisation simple, fiable, rapide et peu onéreuse.

Le but de la présente invention est également de proposer un dispositif pour la mise en oeuvre de ce procédé.

Suivant l'invention, le procédé du type précité pour ausculter par voie vibratoire un tronçon de canalisation est caractérisé en ce qu'il comporte les étapes complémentaires suivantes:
a) on introduit en un point d'impact sur la surface intérieure du tronçon de canalisation une force d'excitation d'entrée prédéterminée;
b) on mesure la réponse vibratoire dudit tronçon de canalisation en un point de mesure, distinct du point d'impact, de ladite surface intérieure;
c) on enregistre, on traite et on analyse les données de nature vibratoire ainsi recueillies.

On sait déterminer facilement une force d'excitation à l'impact, et on sait mesurer facilement la réponse vibratoire d'un élément quelconque à une telle force.

On sait également reconnaître sur une telle réponse vibratoire les traces de défauts ou irrégularités éventuels de l'élément ainsi mis en vibration.

Enfin, il est évident pour l'homme de l'art que la réponse vibratoire d'un tronçon de canalisation ne sera pas la même si ce tronçon est porté par des supports au-dessus de la surface du sol ou s'il est enterré dans un sol très régulier tel que du sable convenablement tassé.

Suivant une version avantageuse de l'invention, on analyse la réponse vibratoire recueillie dans le domaine du temps et dans le domaine des fréquences.

Il est normal d'appliquer à la présente invention les méthodes connues d'analyse des phénomènes vibratoires.

Suivant une version préférée de l'invention, on compare les caractéristiques de la réponse vibratoire recueillie en chaque point à celles de réponses types enregistrées au préalable pour des conditions comparables prédéterminées de nature du tronçon de canalisation et de situation enterrée ou non dudit tronçon dans divers types de terrains connus.

Il est ainsi possible d'aider un spécialiste à dépouiller les résultats d'une campagne de mesures en l'aidant à comparer ces résultats à d'autres résultats associés à des situations prédéterminées connues et répertoriées.

Suivant un autre aspect de l'invention, le dispositif visé par celle-ci pour la mise en oeuvre du procédé précité comporte un engin mobile adapté à se déplacer à l'intérieur dudit tronçon de canalisation, ledit engin mobile comportant des moyens de mesure et étant relié à des moyens de commande et de calcul adaptés à enregistrer, à traiter et à analyser les données fournies par lesdits moyens de mesure.

Suivant l'invention, ce dispositif est caractérisé en ce que ledit engin mobile comporte:
- des moyens formant marteau adaptés à frapper un point de la surface intérieure du tronçon de canalisation;
- des moyens pour actionner ledit marteau et lui communiquer une force prédéterminée;
- des moyens pour recueillir la réponse vibratoire dudit tronçon de canalisation en un point de mesure distinct du point d'impact du marteau.

De tels moyens, connus en eux-mêmes, sont simples, fiables et peu onéreux.

Suivant une version avantageuse de l'invention, le marteau est fixé à l'extrémité d'un bras monté sur un support pivotant solidaire de l'engin, et ce bras est une lame flexible munie d'une jauge de contrainte.

La lame flexible aide à supprimer le risque de rebond du marteau, tandis que la jauge de contrainte sert à mesurer la force d'excitation transmise par le marteau au tronçon de canalisation.

Suivant une version préférée de l'invention, les moyens pour recueillir la réponse vibratoire du tronçon de conduite comportent un accéléromètre présentant une pointe de mesure appliquée contre la paroi intérieure du tronçon de canalisation.

D'autres particularités et avantages de l'invention apparaîtront dans la description détaillée ci-après.

Aux dessins annexés, donnés uniquement à titre d'exemples non limitatifs:
- la figure 1 est une vue schématique en élévation, avec arrachements, d'un dispositif conforme à l'invention comportant un engin mobile à l'intérieur d'un tronçon de canalisation;
- la figure 2 est une vue de gauche de la figure 1 ;
- la figure 3 est une vue de droite de la figure 1 ;
- la figure 4 est une vue partielle agrandie semblable à la figure 2, d'un autre mode de réalisation de l'invention;
- la figure 5 est une vue partielle agrandie semblable à la figure 3 de l'engin de la figure 4.

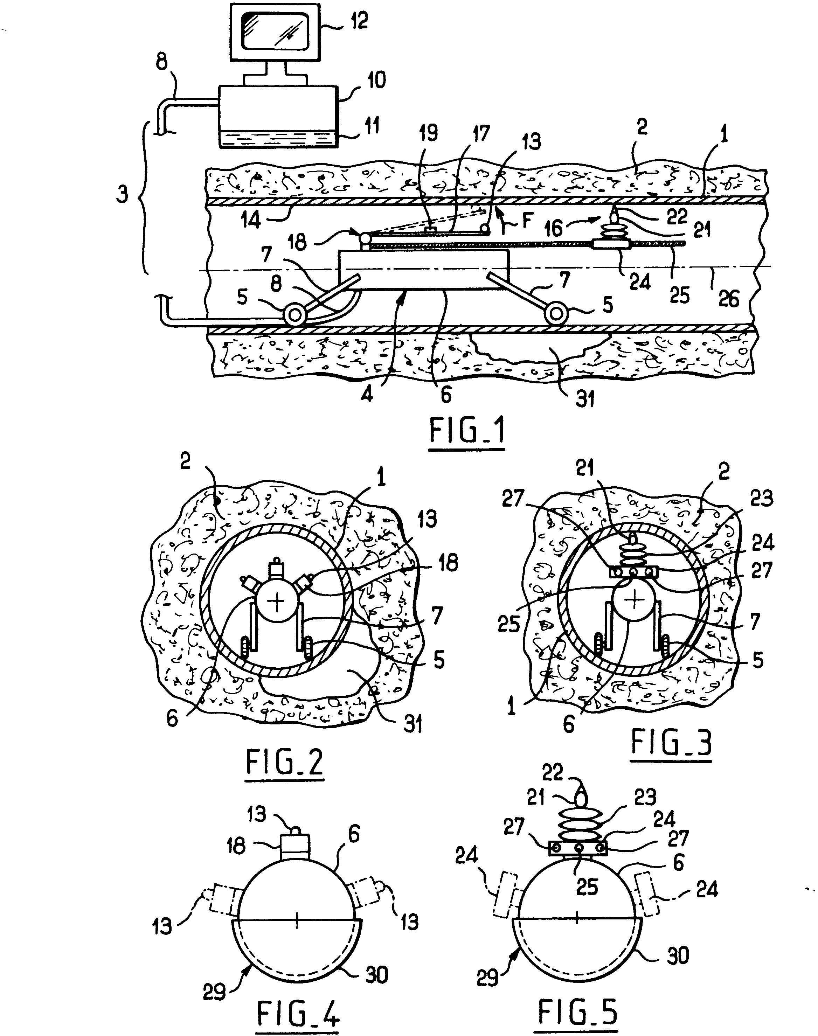

Dans la réalisation schématisée à la figure 1, on a représenté un tronçon de canalisation 1 enterré dans un sol 2.

Le dispositif 3 pour ausculter par voie vibratoire le tronçon de canalisation 1 comporte un engin mobile 4 adapté à se déplacer à l'intérieur dudit tronçon de canalisation 1.

L'engin 4 est d'un type connu quelconque, automoteur ou tracté, monté sur roues, chenilles, patins ou autres.

Dans l'exemple représenté, l'engin 4 comporte quatre roues 5, de préférence semi-gonflées, montées sur un corps 6 par l'intermédiaire de bras 7 qui peuvent être articulés ou montés de manière pivotante par rapport au corps 6 pour adapter l'engin 4 au diamètre de chaque tronçon de canalisation 1.

L'engin mobile 4 comporte des moyens de mesure et est relié par un câble 8 à des moyens de commande et de calcul 9 adaptés à enregistrer, à traiter et à analyser les données fournies par lesdits moyens de mesure.

Ces moyens de commande et de mesure 9 sont constitués dans l'exemple représenté par un micro-ordinateur du type dit PC comportant une unité centrale 10, un clavier de commande 11 et un écran d'affichage 12.

Suivant l'invention, l'engin 4 comporte en outre:
- des moyens formant marteau 13 adaptés à frapper un point de la surface intérieure 14 du tronçon de canalisation 1;
- des moyens 15 pour actionner ledit marteau 13;
- des moyens 16 pour recueillir la réponse vibratoire dudit tronçon de canalisation 1 en un point de mesure distinct du point d'impact du marteau 13.

Le marteau 13 est fixé à l'extrémité d'un bras 17 monté sur un support pivotant 18 solidaire de l'engin 4.

Le marteau 13 est une masse métallique comportant un capteur de force sous forme d'un quartz.

Le bras 17 est une lame flexible, par exemple une lame de scie. Cette lame est munie d'une jauge de contrainte schématisée en 19.

Le support pivotant 18 comporte des moyens 20 pour faire pivoter le bras 17 dans le sens de la flèche F pour que le marteau 13 frappe la surface intérieure 14 du tronçon de canalisation 1, et des moyens pour rappeler le bras 17 dans l'autre sens.

Les moyens 20 sont constitués par exemple par un vérin pivotant classique, qui comporte une partie mobile portant le bras 17 susceptible de pivoter par rapport à une partie fixe autour de l'axe de celle-ci qui est perpendiculaire au plan de la figure 1.

Un tel vérin pivotant peut être actionné dans un seul sens ou dans les deux sens par un moteur électrique ou par un moteur pneumatique. Pour éviter tout rebond, on peut également rappeler immédiatement le marteau 13 au moyen d'un électroaimant (non représenté).

Les moyens 16 pour recueillir la réponse vibratoire du tronçon de conduite 1 comportent un accéléromètre 21 comportant une pointe de mesure 22 appliquée contre la paroi intérieure 14 du tronçon de canalisation 1.

L'accélérométre 21 est installé sur un vérin pneumatique gonflable 23 qui est fixé sur un chariot 24 monté de manière coulissante par rapport à l'engin 4. Le déplacement du chariot 24 est commandé par exemple par une tige filetée 25 entraînée à tourner sur elle-même par un moteur non représenté. Ces déplacements du chariot 24 sont sensiblement parallèles à l'axe longitudinal 26 de la canalisation pour régler la distance entre point d'impact et point de mesure.

Dans la réalisation de la figure 2, le corps 6 de l'engin 4 porte trois marteaux 13 et trois moyens d'actionnement 15. Les trois marteaux 13 sont installés suivant trois génératrices, du corps 6 représenté de forme cylindrique. Les deux marteaux extérieurs ont des positions symétriques l'une de l'autre par rapport au plan vertical contenant l'axe longitudinal 26 de l'engin et l'axe du marteau intermédiaire.

Dans la réalisation de la figure 3, le chariot 24 coulisse en cas de rotation de la tige filetée le long de deux tiges de guidage 27 parallèles à l'axe 26.

Le corps 6 peut comporter trois accéléromètres correspondant aux trois marteaux représentés à la figure 2. On n'a représenté que l'accéléromètre central pour ne pas surcharger la figure.

Dans la réalisation des figures 4 et 5, le corps 28 de l'engin 29 peut pivoter de 90° environ dans chaque sens dans un berceau 30, de sorte que le marteau 13 et l'accéléromètre 21 permettent d'effectuer des mesures sensiblement sur le demi-cylindre supérieur de la canalisation, entre les positions extrêmes schématisées en tirets.

On a ainsi réalisé un engin 4, 29 muni d'un capteur de force, d'un accéléromètre 21, d'un système d'acquisition et de traitement des données informatisé 9.

Cet engin est conçu pour s'adapter à une large gamme de diamètres (300-600 m). Il peut effectuer des mesures sur le demi-cercle supérieur de la canalisation (système sur berceau pivotant). La distance entre le marteau 13 (muni d'un capteur de force) et la pointe 22 de l'accéléromètre 21 est réglable.

Capteur de force et accéléromètre sont montés de sorte à éviter au maximum la transmission, vers l'accéléromètre, des vibrations venant du marteau et passant par la carcasse de l'engin.

L'engin peut être tracté, poussé, ou être automoteur. Dans tous les cas, la conception de l'engin évite la transmission, vers l'accéléromètre, des vibrations venant de la structure et passant par la carcasse de l'engin.

Le but de l'invention est, avec cet engin, d'ausculter la canalisation 1 à partir de l'intérieur de celle-ci pour obtenir des informations concernant
- la qualité du sol 2 entourant la canalisation 1, pour détecter les zones mal compactées, vides 31, etc...
- la dureté de la canalisation, la régularité de sa structure, son état de surface.

L'acquisition des signaux du capteur de force et de l'accéléromètre est réalisée à l'aide d'une carte d'acquisition, embarquée dans un micro-ordinateur portable. La procédure d'acquisition est déclenchée par un signal généré par l'unité de commande de l'engin juste avant la frappe du marteau.

Le procédé d'auscultation comporte l'étape qui consiste à déplacer à l'intérieur du tronçon de canalisation 1 un engin mobile 4, 29 portant différents organes de mesure et à enregistrer, traiter et analyser les résultats des mesures effectuées.

Le principe de la mesure consiste à exciter la canalisation par impact au moyen d'un marteau, et à enregistrer:
- la force appliquée lors de l'impact;
- la réponse vibratoire de la canalisation.

Le traitement et l'interprétation des données recueillies renseignent sur les propriétés de la canalisation (défauts) et sur la qualité de l'interface sol-canalisation.

Suivant l'invention, le procédé précité est caractérisé en ce qu'il comporte les étapes complémentaires suivantes:
a) on introduit en un point d'impact sur la surface intérieure du tronçon de canalisation une énergie d'excitation d'entrée prédéterminée;
b) on mesure la réponse vibratoire dudit tronçon de canalisation en un point de mesure, distinct du point d'impact, de ladite surface intérieure;
c) on enregistre, on traite et on analyse les données de nature vibratoire ainsi recueillies.

Deux types d'analyse sont envisagés, une analyse spectrale et une analyse modale.

Et trois types d'applications sont envisageables:
1. analyse de compacité de terrain;
2. analyse de l'état de la conduite;
3. analyse de structure canalisation/terrain.

L'analyse du signal consiste à étudier la réponse du seul accéléromètre dans les domaines temporel et fréquentiel. Le relevé de la durée du signal donne une première indication de l'amortissement des vibrations, qui, en première approximation, dépend de la compacité du terrain autour de la canalisation 1. Dans le domaine fréquentiel, l'évolution de la fréquence des résonances et l'apparition de nouvelles résonances renseignent respectivement sur la compacité du terrain et d'éventuels défauts de la structure de la canalisation.

Une autre analyse du même principe consiste à étudier le rebond du marteau dans le cas où la lame de scie est munie d'une jauge de contrainte. Cette analyse nous renseigne sur la caractéristique mécanique de la canalisation à l'endroit où le marteau a frappé.

L'analyse modale consiste à étudier le rapport réponse vibratoire (sortie)/force d'excitation (entrée), qui peut être représenté, dans le domaine fréquentiel, par la "Fonction de Réponse en Fréquence" (FRF, modèle linéaire). Celle-ci donne l'ensemble des modes de vibration propres de la canalisation dans une gamme de fréquences choisie. Pour chaque mode, la fréquence, la déformée et le coefficient d'amortissement peuvent être déterminés par l'analyse modale. L'ensemble de ces paramètres constitue une description complète du comportement dynamique de la canalisation testée, et permet des renseignements sur le degré d'intégrité de la structure et sur la compacité du terrain autour de la canalisation.

Dans le cadre du traitement automatique des données par ordinateur, on compare les caractéristiques de la réponse vibratoire recueillie en chaque point à celles de réponses types enregistrées au préalable pour des conditions comparables prédéterminées de nature du tronçon de canalisation et de situation enterrée ou non dudit tronçon dans divers types de terrains connus.

Bien entendu, l'invention n'est pas limitée aux modes de réalisation que l'on vient de décrire, et on peut apporter à ceux-ci de nombreux changements et modifications sans sortir du domaine de l'invention.

## Revendications

1. Procédé pour ausculter par voie vibratoire un tronçon de canalisation (1), en particulier un tronçon de canalisation enterrée, ce procédé comportant l'étape qui consiste à déplacer à l'intérieur dudit tronçon de canalisation un engin mobile (4) portant différents organes de mesure et à enregistrer et traiter les résultats des mesures effectuées à des instants prédéterminés, caractérisé en ce qu'il comporte les étapes complémentaires suivantes:
a) on introduit en un point d'impact sur la surface intérieure du tronçon de canalisation (1) une force d'excitation d'entrée prédéterminée;
b) on mesure la réponse vibratoire dudit tronçon de canalisation (1) en un point de mesure, distinct du point d'impact, de ladite surface intérieure;
c) on enregistre, on traite et on analyse les données de nature vibratoire ainsi recueillies.

2. Procédé conforme à la revendication 1, caractérisé en ce qu'on analyse la réponse vibratoire recueillie dans le domaine du temps et dans le domaine des fréquences.

3. Procédé conforme à l'une des revendications 1 ou 2, caractérisé en ce qu'on analyse les caractéristiques du rebond d'un marteau (13) servant à introduire l'énergie vibratoire d'entrée.

4. Procédé conforme à l'une des revendications 1 à 3, caractérisé en ce qu'on étudie le rapport entre la réponse vibratoire recueillie et la force d'excitation appliquée au point d'impact, et en ce qu'on détermine pour chaque mode de vibration propre du tronçon le coefficient d'amortissement.

5. Procédé conforme à l'une quelconque des revendications 1 à 5, caractérisé en ce qu'on compare les caractéristiques de la réponse vibratoire recueillie en chaque point à celles de réponses types enregistrées au préalable pour des conditions comparables prédéterminées de nature du tronçon de canalisation (1) et de situation enterrée ou non dudit tronçon dans divers types de terrains connus.

6. Dispositif pour ausculter par voie vibratoire un tronçon de canalisation (1) suivant le procédé conforme à l'une quelconque des revendications 1 à 5, ce dispositif comportant un engin mobile (4) adapté à se déplacer à l'intérieur dudit tronçon de canalisation (1), ledit engin mobile (4) comportant des moyens de mesure et étant relié à des moyens de commande et de calcul adaptés à enregistrer, à traiter et à analyser les données fournies par lesdits moyens de mesure, caractérisé en ce que ledit engin mobile (4) comporte:
- des moyens formant marteau (13) adaptés à frapper un point de la surface intérieure (14) du tronçon de canalisation (1);
- des moyens (15) pour actionner ledit marteau (13);
- des moyens (16) pour recueillir la réponse vibratoire dudit tronçon de canalisation (1) en un point de mesure distinct du point d'impact du marteau (13).

7. Dispositif conforme à la revendication 6, caractérisé en ce que le marteau (13) est fixé à l'extrémité d'un bras (17) monté sur un support pivotant (18) solidaire de l'engin (4).

8. Dispositif conforme à la revendication 7, caractérisé en ce que le marteau (13) comporte un capteur de force.

9. Dispositif conforme à l'une des revendications 7 ou 8, caractérisé en ce que le support pivotant (18) comporte des moyens pour faire pivoter le bras (17) dans un sens pour que le marteau (13) frappe la surface intérieure (14) du tronçon de canalisation (1), et des moyens pour rappeler le bras (17) dans l'autre sens.

10. Dispositif conforme à l'une des revendications 7 à 9, caractérisé en ce que le bras (17) est une lame flexible.

11. Dispositif conforme à la revendication 10, caractérisé en ce que la lame flexible (17) est munie d'une jauge de contrainte (19).

12. Dispositif conforme à l'une quelconque des revendications 6 à 11, caractérisé en ce que les moyens (16) pour recueillir la réponse vibratoire du tronçon de conduite (1) comportent un accéléromètre (21) présentant une pointe de mesure (22) appliquée contre la paroi intérieure (14) du tronçon de canalisation (1).

13. Dispositif conforme à la revendication 12, caractérisé en ce que l'accéléromètre (21) est monté sur un vérin pneumatique (23) gonflable.

14. Dispositif conforme à l'une des revendications 12 ou 13, caractérisé en ce que l'accéléromètre (21) est monté sur un chariot (24) monté de manière coulissante par rapport à l'engin (4).

15. Dispositif conforme à l'une quelconque des revendications 6 à 14, caractérisé en ce qu'il comporte des moyens permettant d'obtenir plusieurs points d'impact différents sur une même demi-circonférence supérieure d'une section transversale du tronçon de canalisation, et les divers points de mesure correspondants.
